# EUROPÄISCHE PATENTSCHRIFT

(11) **EP 3 042 160 B1**
(45) Veröffentlichungstag und Bekanntmachung des Hinweises auf die Patenterteilung: **20.06.2018**
(21) Anmeldenummer: 14755345.7
(22) Anmeldetag: 15.08.2014
(51) Int. Cl.: G01F 23/296

(54) **VERFAHREN ZUM ERFASSEN EINES FÜLLSTANDES IN EINEM SAMMELBEHÄLTER UND SENSOREINRICHTUNG**
METHOD FOR MEASURING THE FLUID LEVEL IN A COLLECTING VESSEL AND SENSOR INSTALLATION
PROCÉDÉ DE MESURE DE NIVEAU D'UN FLUIDE DANS UN RÉSERVOIR COLLECTEUR ET DISPOSITIF DE DÉTECTION

(30) Priorität: 03.09.2013 DE 102013109606
(43) Veröffentlichungstag der Anmeldung: 13.07.2016
(73) Patentinhaber: Pepperl + Fuchs GmbH, 68307 Mannheim (DE)
(72) Erfinder: LUBER, Ernst, 92259 Neukirchen (DE); SERTL, Claudia, 92259 Neukirchen (DE)
(74) Vertreter: Mierswa, Klaus
(86) Internationale Anmeldenummer: PCT/EP2014/067490
(87) Internationale Veröffentlichungsnummer: WO 2015/032606

(56) Entgegenhaltungen:
- EP-A2- 0 780 665
- WO-A1-2006/072160
- WO-A2-03/054481
- DE-A1- 10 149 851
- DE-A1- 10 260 962
- US-A- 3 985 030

## Beschreibung

Die Erfindung betrifft ein Verfahren zum Erfassen eines Füllstands in einem Sammelbehälter nach dem Oberbegriff des Patentanspruchs 1.

Mit einer Sensoreinrichtung können bestimmte physikalische, chemische Eigenschaften oder stoffliche Beschaffenheiten einer Umgebung erfasst werden, so dass es möglich ist, auch einen Füllstand in einem Sammelbehälter, zum Beispiel der Füllstand in einem Müllbehälter, zu messen. Bei diesem Messverfahren zum Erfassen der Füllhöhe in dem Sammelbehälter sendet ein in der Sensoreinrichtung angeordneter Ultraschallwandler Signale aus, die von dem Inhalt bzw. von dem Boden des Sammelbehälters als Echosignale reflektiert werden. Über die Echosignale wird der Abstand zwischen dem Ultraschallwandler und dem Inhalt bzw. der Abstand zwischen dem Ultraschallwandler und dem Boden des Sammelbehälters bestimmt. Aus diesen Echosignalen werden somit Abstandswerte erhalten, aus denen der Füllstand in dem Sammelbehälter ermittelt werden kann.

Ein solches Verfahren zur Füllstanderfassung ist beispielsweise in EP 2 148 219 B1 beschrieben.

In DE 4308373 A1 wird ein Verfahren zur Erkennung und zur Separation von Nutz- und Störechos im Empfangssignal von Abstandssensoren beschrieben. Diese Abstandssensoren arbeiten nach dem Impuls-Echo-Prinzip. Dabei wird einem in einem Empfangssignal detektierten Maximum ein Einzelecho zugeordnet, wobei aus dem Empfangssignal für das Einzelecho charakteristische Echomerkmale wertemäßig bestimmt werden. In einer nachfolgenden Auswertung werden diese Echomerkmale derart miteinander verknüpft, dass jedem Einzelecho eine Mehrfachechowahrscheinlichkeit zugeordnet wird.

In DE 4308373 A1 bleiben jedoch bei den Messungen die Stärke der ausgesendeten Signale sowie die Sendeleistung konstant, was zu erheblichen Einbußen im Nahbereich führen kann.

Aus US 2007/02614867 A1 ist ein Sensor zum Messen eines Flüssigkeitsstandes in einem Behälter mittels Ultraschall bekannt. Die Sendeleistung wird dabei anhand von Echosignalen definiert. Zusätzlich wird die Dämpfung in Abhängigkeit von der Entfernung festgelegt. Einflussgrößen, wie zum Beispiel Luftfeuchtigkeit oder Temperatur, werden bei der Steuerung der Sendeleistung wie nicht berücksichtigt.

Die DE 10260962 A1 offenbart ein Füllstandsmessgerät zur Messung des Füllstandes eines Füllgutes in einem Behälter sowie ein entsprechendes Laufzeitverfahren. Dabei werden Daten, die verschiedenen Füllständen zugeordnet werden können, in einer Tabelle abgelegt werden. Maximale und minimale Füllstände als Grenzwerte oder andere Randbedingungen werden nicht abgelegt.

Aus US 3985030 A ist ein Puls-Echo-System bekannt, mit dem die Tiefe einer Flüssigkeit in einem Tank überwacht wird. Hierbei wird gelehrt, dass es insbesondere bei niedrigem Füllstand von Vorteil seien kann, die übertragene akustische Leistung mit der Tiefe des Tanks bis zum Füllstand der Flüssigkeit zu variieren. Dies soll insbesondere geschehen, indem die Impulslänge variiert wird. Die US 3985030 A lehrt jedoch nicht, die übertragene akustische Leistung bei mehreren Messungen ein- und desselben Füllstands zu variieren, um genauere Messungen zu erhalten.

Aus der DE 10149851 A1 ist schließlich ein Verfahren zur Bestimmung des Füllstandes eines Füllguts in einem Behälter bekannt. Dabei werden Messsignale mit zumindest zwei unterschiedlichen elektronisch geschalteten Hauptabstrahlrichtungen in zumindest zwei voneinander verschiedenen Messbereichen, die im Innern des Behälters liegen, abgestrahlt. Bei diesem Verfahren wird jedoch nicht für jeden Erfassungsbereich ein Messzyklus durchgeführt.

Aufgabe der vorliegenden Erfindung ist es deshalb, ein Verfahren zum Erfassen eines Füllstands in einem Sammelbehälter bereitzustellen, mit dem Abstandsmessungen sowohl im Nahbereich als auch im Fernbereich durchgeführt und unerwünschte Störsignale unterdrückt werden können.

Diese Aufgabe wird durch das Verfahren gemäß dem Patentanspruch 1 sowie die Sensoreinrichtung zur Durchführung des Verfahrens gemäß dem Patentanspruch 7 gelöst. Die Erfindung betrifft damit ein Verfahren zum Erfassen eines Füllstands in einem Sammelbehälter mittels einer Sensoreinrichtung, wobei die Sensoreinrichtung als Ultraschallsensor ausgebildet ist. Bei diesem Verfahren werden die verschiedenen Bereiche (Erfassungsbereiche) des Sammelbehälters, die es zu vermessen gilt, mittels Ultraschall vermessen.
Das Verfahren sieht dazu eine Messsequenz vor, die zumindest einen Messzyklus umfasst. Mit jedem Messzyklus wird ein Erfassungsbereich vermessen. Sollen somit m Erfassungsbereiche vermessen werden, so sind dazu entsprechend auch m Messzyklen erforderlich. Jeder dieser m Messzyklen besteht aus n Einzelmessungen (mit n = 2, 3, ...), wobei mit jedem Messzyklus ein bestimmter Erfassungsbereich eines Inneren des Sammelbehälters vermessen wird. Dadurch, dass bei den n Einzelmessungen die Sendeleistung und/oder die Empfangsverstärkung und/oder der Sendeburst angepasst wird, gelingt es, unerwünschte Störsignale auszublenden. Die Einzelmessungen unterscheiden sich somit durch mindestens eine der drei Variablen (Sendeleistung bzw. Empfangsverstärkung bzw. Sendeburst) voneinander. Erfindungsgemäß beinhaltet das Verfahren, dass durch das Variieren der Sendeleistung und/oder der Empfangsverstärkung und/oder des Sendebursts weniger Erfassungsbereiche vermessen werden müssen, womit auch weniger Messzyklen und somit weniger Einzelmessungen erforderlich sind, um den Füllstand des Sammelbehälters zu ermitteln. Vor Beginn einer Messsequenz findet dabei eine Initialisierung statt. Durch diese Initialisierung wird die Sensoreinrichtung in Bezug auf einen bestimmten Sammelbehältertyp, der dem Typ an Sammelbehälter entspricht, den es zu vermessen gilt, kalibriert. Dazu wird aus dem Datenspeichermodul ein zuvor angefertigtes Profil für einen bestimmten Sammelbehältertyp hochgeladen, das abhängig vom jeweiligen Sammelbehältertyp sowie von dessen Behälterabmessungen erstellt wurde. Bei Erstellen dieses Profils werden die Grenzwerte für den Füllstand des Sammelbehältertyps definiert, wobei als unterer Grenzwert der minimale Füllstand (= Sammelbehälter ist leer) und als oberer Grenzwert der maximale Füllstand (= Sammelbehälter ist voll) des Sammelbehälters eingegeben werden. In das Profil fließen auch noch andere Randbedingungen ein, wie zum Beispiel die Luftfeuchtigkeit oder die Außentemperatur. Außerdem werden unterschiedliche Sendeleistungen, Empfangsverstärkungen sowie Erfassungsgrenzen, d.h. die Empfindlichkeit des Ultraschallwandlers, in dem Profil hinterlegt. Diese Initialisierung erfolgt nur einmal für einen bestimmten Sammelbehältertyp. Nachdem die Initialisierung durchgeführt wurde, kann mit der eigentlichen Messsequenz begonnen werden. Erfindungsgemäß beinhaltet das Verfahren ferner, dass für jeden der m Messzyklen (mit m = 2, 3, ...) eine Plausibilitätsprüfung durchgeführt wird. Dabei wird geprüft, ob die Einzelmessungen der verschiedenen Messzyklen zu verwertbaren Messergebnissen geführt haben. Es wird also überprüft, ob die durch die Messzyklen erhaltenen Messwerte gültig und damit verwertbar sind. Nicht verwertbare Messwerte werden mit dieser Plausibilitätsprüfung herausgefiltert, so dass nur die verwertbaren Messwerte für die weitere Auswertung verwendet werden. Damit können von vornherein Fehlmessungen erkannt werden, so dass durch Fehlmessungen erhaltene Messwerte nicht zur Bestimmung des Abstandes von Ultraschallwandler zum Inhalt des Sammelbehälters bzw. zur Bestimmung des Abstandes von Ultraschallwandler zum Boden des Sammelbehälters herangezogen werden. Damit können die Abstandswerte sehr genau ermittelt werden, womit auch der Füllstand sehr genau bestimmt werden kann.

Vorteilhaft ist zudem, dass die verwertbaren Messwerte mittels einer adaptiven Filterung gemittelt und die durch die Mittelung erhaltenen Abstandswerte auf ihre Stabilität hin überprüft werden. Durch die Stabilitätsprüfung werden nur verwertbare Abstandswerte für die Berechnung des Füllstands verwendet. Nicht verwertbare Abstandswerte werden hingegen nicht mit in die Berechnung des Füllstands einbezogen. Damit ist es möglich, den Füllstand des Sammelbehälters mit einem sehr niedrigen Rechenaufwand und zudem sehr genau zu bestimmen.

Vorteilhafterweise werden die ermittelten Abstandswerte über eine bidirektionale serielle Schnittstelle an eine externe übergeordnete Steuerung gesendet, wobei die übergeordnete Steuerung aus den durch Mittelung der Messwerte erhaltenen Abstandswerte den Füllstand des Sammelbehälters errechnet. Für die ungültigen Abstandswerte wird in der übergeordneten externen Steuerung eine Diagnose durchgeführt. Diese Diagnose hilft, das Verfahren zur Füllstandermittlung zu optimieren.
Ein Ausführungsbeispiel wird im Folgenden anhand von Figuren gezeigt und näher erläutert. Es zeigen:
- Figur 1: eine Sensoreinrichtung zur Füllstanderfassung bei einem Sammelbehälter;
- Figur 2: einen schematischen Aufbau der in Figur 1 gezeigten Sensoreinrichtung und
- Figur 3: eine schematische Darstellung einer Messsequenz.

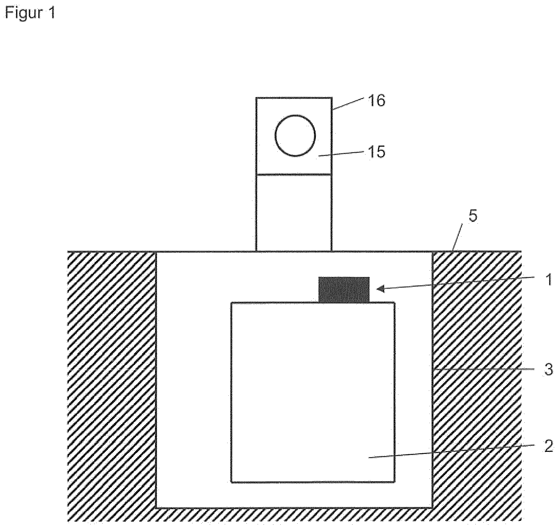

In Figur 1 ist eine Sensoreinrichtung 1 zur Füllstanderfassung bei einem Sammelbehälter 2 dargestellt. Bei diesem Sammelbehälter 2 kann es sich - wie in Figur 1 dargestellt - um einen Unterflurbehälter 2 handeln. Dieser Unterflurbehälter 2 ist in einer Kammer 3 untergebracht, die Teil eines Gebäudes (nicht dargestellt) sein kann. Die Kammer 3, in der Unterflurbehälter 2 untergebracht ist, liegt unterhalb eines Bodens 5. Oberhalb des Bodens 5 ragt ein Einfüllschacht 16 mit einer Einfüllklappe 15 heraus.

Über den Einfüllschacht 16 ist es möglich, den Unterflurbehälter 2 zu beschicken. Handelt es sich bei dem Unterflurbehälter 2 beispielsweise um einen Müllbehälter, so kann dieser Unterflurbehälter 2 über den Einfüllschacht 16 mit Müll beschickt werden.

Die Sensoreinrichtung 1 umfasst einen Ultraschallwandler (nicht dargestellt), mit dem der Abstand zwischen dem Ultraschallwandler und dem Inhalt des Sammelbehälters 2 (Sammelbehälter ist gefüllt) bzw. der Abstand zwischen dem Ultraschallwandler und einem Boden des Sammelbehälters 2 (Sammelbehälter ist in diesem Bereich leer) ermittelt werden kann. Mit dem Ultraschallwandler werden zeitlich aufeinander folgend verschiedene Bereiche (so genannte Erfassungsbereiche) eines Inneren des Sammelbehälters 2 vermessen.
Vorzugsweise ist der Ultraschallwandler derart ausgebildet, dass dieser Ultraschallwandler zwischen einem aktiven Betriebszustand und einem Stromsparmodus wechseln kann. Ist die Einfüllklappe 15 des Einfüllschachts 16 geschlossen, so befindet sich der Ultraschallwandler in dem Stromsparmodus. In diesem Stromsparmodus verbraucht der Ultraschallwandler weniger Strom als im Betriebszustand. Wird die Einfüllklappe 15 des Einfüllschachts 16 geöffnet, so wird der Ultraschallwandler in den aktiven Betriebszustand überführt und der Ultraschallwandler beginnt mit dem Messverfahren in Form einer Messsequenz. Dabei führt der Ultraschallwandler für eine definierte Anzahl von zu vermessenden Bereichen (Erfassungsbereiche) des Sammelbehälters jeweils einen Messzyklus durch. Jeder Messzyklus besteht aus mehreren Einzelmessungen. Damit der Ultraschallwandler mit der Messsequenz beginnen kann, muss dieser Ultraschallwandler zuvor von dem Ruhezustand in den aktiven Betriebszustand überführt werden. Dazu ist eine Aktivierungseinrichtung (nicht dargestellt) vorgesehen, die - bedingt durch beispielsweise äußere Umwelteinflüsse - den Ultraschallwandler in den aktiven Betriebszustand überführt. Dazu kann die Aktivierungseinrichtung einen Sensor, beispielsweise einen Lichtsensor, einen Bewegungssensor, einen Temperatursensor, einen elektrischen Kontakt oder ein Schwingungsmessgerät aufweisen, der solche äußeren Umwelteinflüsse wahrnimmt.
Die Aktivierung der Aktivierungseinrichtung erfolgt dabei über eine Auslösevorrichtung, beispielsweise der Einfüllklappe 15. Wird zum Beispiel die Einfüllklappe 15 geöffnet, so fällt Licht in das Innere der des Einfüllschachts 16 und das einfallende Licht kann durch den Lichtsensor registriert werden. Auch ist es möglich, dass beim Öffnen der Einfüllklappe 15 das Schwingungsmessgerät angeregt wird. Möglich ist aber auch, dass die Aktivierungseinrichtung ein Zeiterfassungssystem aufweist, wodurch der Ultraschallwandler die Messsequenzen in vorher definierten Zeitabständen durchführt.
Wurde die Aktivierungseinrichtung aktiviert, so sendet die Aktivierungseinrichtung ein Signal an die Sensoreinrichtung 1, wodurch die Sensoreinrichtung 1 und damit auch der Ultraschallwandler in den aktiven Betriebszustand überführt wird und eine Messsequenz ausführt.

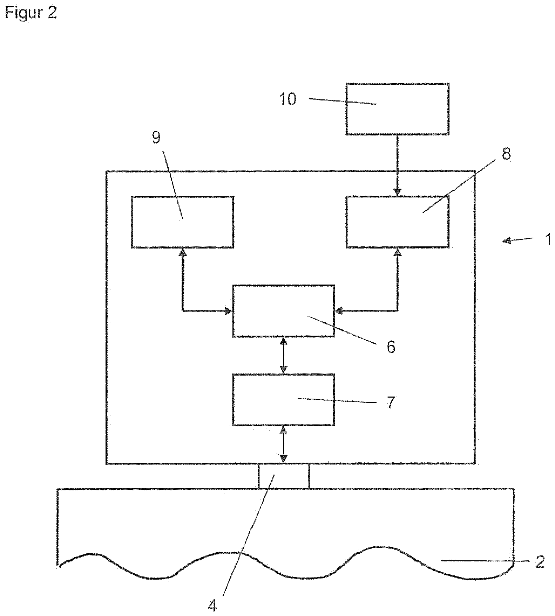

In Figur 2 ist ein schematischer Aufbau der in Figur 1 gezeigten Sensoreinrichtung 1 dargestellt. Die Sensoreinrichtung 1 weist einen Ultraschallwandler 4 auf, mit dem der Abstand zwischen dem Ultraschallwandler 4 und dem Inhalt des Sammelbehälters 2 bzw. der Abstand zwischen dem Ultraschallwandler 4 und einem Boden des Sammelbehälters 2 gemessen werden kann. Mit dem Ultraschallwandler 4 werden dabei zeitlich aufeinanderfolgend verschiedene Bereiche (Erfassungsbereiche) des Inneren des Sammelbehälters 2 vermessen.
Die Sensoreinrichtung 1 umfasst ferner ein Steuermodul 6, ein Sendeempfangsmodul 7, eine bidirektionale serielle Schnittstelle 8 und ein Datenspeichermodul 9. Obwohl in Figur 1 nicht dargestellt, so können das Sendeempfangsmodul 7, die bidirektionale serielle Schnittstelle 8 und das Datenspeichermodul 9 auch Bestandteil des Steuermoduls 6 sein. Das Steuermodul 6 weist als Steuerbaustein vorzugsweise einen Microcontroller mit integrierten Analogfunktionen auf, wie einer Stromquelle, über die die Sendeleistung gesteuert wird, sowie einen programmierbaren Verstärker über den die Empfangsverstärkung gesteuert wird.

Außerhalb der Sensoreinrichtung 1 ist eine externe übergeordnete Steuerung 10 vorgesehen, die eine lokale Füllstandanzeige aufweisen kann. Bei dieser lokalen Füllstandanzeige kann es sich um einen Monitor handeln. Mit der externen Steuerung 10 kann der ermittelte Füllstand des Sammelbehälters 2 überwacht werden. Ferner kann mit der externen Steuerung 10 eine Diagnose der Sensoreinrichtung 1 durchgeführt werden, beispielsweise wenn Abstandswerte ermittelt wurden, die nicht für die Ermittlung des Füllstands verwendet werden können, zum Beispiel, weil diese fehlerhaft sind. Die für die Durchführung der Diagnose erforderlichen Diagnosewerte erhält die externe Steuerung 10 von der bidirektionalen seriellen Schnittstelle 8. Die externe Steuerung 10 kann dabei eine lokale Meldevorrichtung oder ein Fernwirkmodul sein.

Die externe Steuerung 10 steht mit der bidirektionalen seriellen Schnittstelle 8 der Sensoreirichtung 1 in Verbindung. Diese bidirektionale serielle Schnittstelle 8 ist wiederum mit dem Steuermodul 6 verbunden.

Soll der Füllstand des Sammelbehälters 2 ermittelt werden, so erfolgt in einem ersten Schritt eine Initialisierung, durch die die Sensoreinrichtung 1 in Bezug auf einen bestimmten Sammelbehältertyp kalibriert wird. Dazu wird ein bestimmtes Profil, das in dem Datenspeichermodul 9 abgespeichert ist von der bidirektionalen seriellen Schnittstelle 8 hochgeladen und in dem Steuermodul 6 hinterlegt. Diese Profile dienen zur Kalibrierung der Sensoreinrichtung 1, wobei die Profile einem bestimmten Sammelbehältertyp zugeordnet sind. Da die Profile einem bestimmten Sammelbehältertyp zugeordnet sind, erfolgt die Kalibrierung somit abhängig von Behälterabmessungen eines bestimmten Sammelbehältertyps. Dadurch ist es auch möglich, eine Bezugsgröße für den Füllstand zu definieren. Dazu werden vor Beginn der Messsequenz Grenzwerte für den Füllstand eines bestimmten Sammelbehältertyps definiert, wobei als unterer Grenzwert der minimale Füllstand (= der Sammelbehälter ist leer) und als oberer Grenzwert der maximale Füllstand (= der Sammelbehälter ist voll) eingegeben werden. In dem Datenspeichermodul 9 werden zudem unterschiedliche Sendeleistungen, Empfangsverstärkungen sowie Erfassungsgrenzen, d.h. die Empfindlichkeit des Ultraschallwandlers 4, hinterlegt, so dass beim Anlegen eines Profils für einen bestimmten Sammelbehältertyp auch diese Parameter berücksichtigt werden. Für die Initialisierung werden vorteilhafterweise auch andere Randbedingungen einbezogen, wie zum Beispiel Luftfeuchtigkeit oder Temperatur. Mit dem Sendeempfangsmodul 7, das zwischen dem Steuermodul 6 und dem Ultraschallwandler 4 angeordnet ist, lässt sich die Sendeleistung, die Empfangsverstärkung und auch der Sendeburst konfigurieren.

Nach der Initialisierung erfolgt die eigentliche Messsequenz, die aus mehreren Messzyklen besteht. Jede dieser Messzyklen besteht wiederum aus mehreren Einzelmessungen. Bei jeder Einzelmessung wird der Abstand zwischen dem Ultraschallsensor 4 und dem Inhalt des Sammelbehälters 2 bzw. der Abstand zwischen dem Ultraschallsensor 4 und dem Boden der Sammelbehälters 2 gemessen. Die Anzahl der Messzyklen in einer Messsequenz, hängt beispielsweise von der Größe oder von dem Aufbau des zu vermessenden Sammelbehälters ab. Je größer der Sammelbehälter und je komplexer der Aufbau des Sammelbehälters ist, desto mehr Messzyklen sind erforderlich.

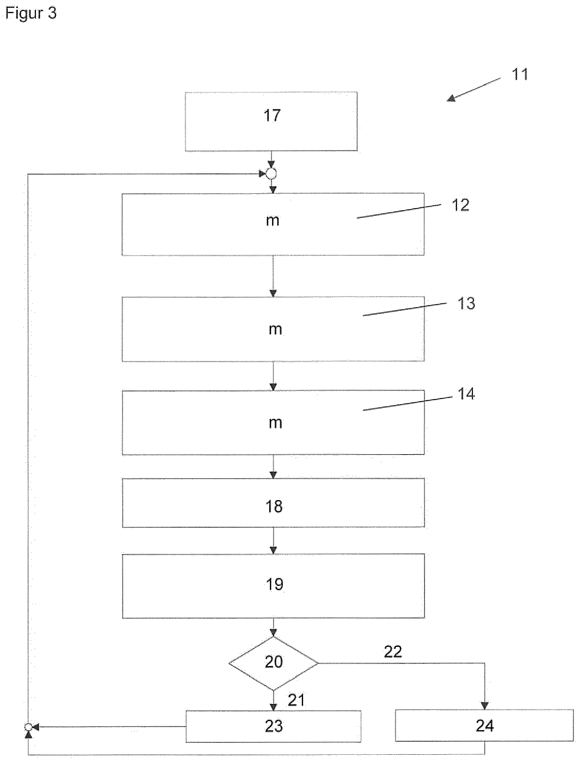

Figur 3 zeigt eine schematische Darstellung einer Messsequenz 11 in Form eines Flussdiagramms. Bevor der Füllstand eines Sammelbehälters eines bestimmten Sammelbehältertyps ermittelt wird, erfolgt in einem ersten Schritt eine Initialisierung 17 der Sensoreinrichtung in Bezug auf diesen Sammelbehältertyp. Dabei wird diese Initialisierung 17 in dem Steuermodul 6 (siehe Figur 2) durchgeführt. Durch diese Initialisierung 17 wird die Sensoreinrichtung 1 in Bezug auf diesen bestimmten Sammelbehältertyp konfiguriert. Dazu wird aus dem Datenspeichermodul 9 (vergleiche Figur 2) ein zuvor angefertigtes Profil hochgeladen, das abhängig vom Sammelbehältertyp und damit auch abhängig von dessen Behälterabmessungen erstellt wurde. Beim Erstellen dieses Profils werden die Grenzwerte für den Füllstand des Sammelbehältertyps definiert, wobei als unterer Grenzwert der minimale Füllstand (= Sammelbehälter ist leer) und als oberer Grenzwert der maximale Füllstand (= Sammelbehälter ist voll) des Sammelbehälters eingegeben werden. Bei der Erstellung des Profils fließen auch noch andere Randbedingungen ein, wie zum Beispiel die Luftfeuchtigkeit oder die Außentemperatur. Außerdem sind unterschiedliche Sendeleistungen, Empfangsverstärkungen sowie Erfassungsgrenzen, d.h. die Empfindlichkeit des Ultraschallwandlers, in dem Profil hinterlegt. Diese Initialisierung 17 erfolgt nur einmal für den Sammelbehälter, dessen Füllstand ermittelt werden soll. Nach dieser Initialisierung 17 beginnt die eigentliche Messsequenz 11.

Jede Messsequenz enthält m Messzyklen, wobei bei jedem Messzyklus ein Bereich eines Inhalts des Sammelbehälters (= Erfassungsbereich) vermessen wird. Sollen somit m Erfassungsbereiche vermessen werden (mit m = 2, 3,...), so sind dafür ebenfalls m Messzyklen erforderlich. Jeder Messzyklus besteht aus mehreren Einzelmessungen, wobei mit jeder Einzelmessung der Abstand zwischen dem Ultraschallwandler und dem Inhalt des Sammelbehälters bzw. der Abstand zwischen dem Ultraschallwandler und dem Boden des Sammelbehälters für einen bestimmten Erfassungsbereich in Form von Messwerten erfasst wird. Bei jeder der n Einzelmessungen werden dabei die Sendeleistung und/oder die Empfangsverstärkung und/oder der Sendeburst variiert. Die Messsequenz 11 gemäß Figur 3 steht aus drei Messzyklen 12 bis 14, wobei jeder Messzyklus 12 bis 14 n Einzelmessungen (mit n = 2, 3,...) umfasst. Obwohl die in der Figur 3 gezeigte Messsequenz 11 nur drei Messzyklen 12 bis 14 beinhaltet, so ist klar, dass eine Messsequenz auch mehr als drei Messzyklen aufweisen kann, zumindest aber einen Messzyklus aufweisen muss. Bei jeder dieser n Einzelmessungen eines jeden Messzyklus 12 bis 14 sendet der Ultraschallwandler ein Ultraschallsignal aus, das in einem Inneren des Sammelbehälters reflektiert wird, wobei das reflektierte Signal als Echosignal wieder vom Ultraschallwandler empfangen wird. Das Echosignal wird vom Ultraschallwandler 4 in ein elektrisches Signal umgewandelt und über das Sendeempfangsmodul 7 an das Steuermodul 6 weitergeleitet (vergleiche dazu auch Figur 2).

In dem elektrischen Signal sind Informationen über die Amplitude sowie die Laufzeit des Echosignals enthalten. Dieses elektrische Signal korreliert mit dem Abstand zwischen dem Ultraschallwandler und dem Inhalt des Sammelbehälters bzw. dem Abstand zwischen dem Ultraschallwandler und einem Boden des Sammelbehälters und wird als Messwert in dem Steuermodul 6 (vergleiche Figur 2) abgespeichert. Bei jeder der n Einzelmessungen werden eine Sendeleistung und/oder eine Empfangsverstärkung und/oder ein Sendeburst variiert. Durch das Variieren der Sendeleistung und/oder der Empfangsverstärkung und/oder des Sendebursts müssen weniger Erfassungsbereiche vermessen werden, womit weniger Messzyklen und damit auch weniger Einzelmessungen erforderlich sind, um den Füllstand des Sammelbehälters zu ermitteln.

Mit dem ersten Messzyklus 12 wird für einen ersten Erfassungsbereich der Abstand zwischen dem Ultraschallwandler und dem Inhalt des Sammelbehälters bzw. der Abstand zwischen dem Ultraschallwandler und dem Boden des Sammelbehälters ermittelt. Dieser Messzyklus 12 besteht aus mehreren Einzelmessungen, wobei bei jeder Einzelmessung die Sendeleistung und/oder die Empfangsverstärkung und/oder der Sendeburst variiert werden. Die Einzelmessungen unterscheiden sich somit durch mindestens eine der drei Variablen (Sendeleistung bzw. Empfangsverstärkung bzw. Sendeburst) voneinander. Durch jede der Einzelmessungen wird somit ein Messwert erhalten, der einem Abstand zwischen dem Ultraschallwandler und dem Inhalt des Sammelbehälters bzw. dem Abstand zwischen dem Ultraschallwandler und dem Boden des Sammelbehälters entspricht. Umfasst der Messzyklus 12 somit n Einzelmessungen (mit n = 2, 3, ...), so werden auch m Messwerte erhalten.

Diese n Einzelmessungen des ersten Messzyklus 12 werden bei schwacher Sendeleistung sowie bei schwacher Empfangsverstärkung durchgeführt, so dass der erste Messzyklus 12 für kurze Messabstände und starke Störreflexionen optimiert ist.

Mit dem zweiten Messzyklus 13 wird ein zweiter Erfassungsbereich vermessen. Der zweite Messzyklus 13 umfasst dabei wiederum n Einzelmessungen (mit n = 2, 3, ...), wobei bei jeder Einzelmessung die Sendeleistung und/oder die Empfangsverstärkung und/oder der Sendeburst variiert wird. Auch bei diesem Messzyklus 13 unterscheiden sich die Einzelmessungen somit durch mindestens eine der drei Variablen (Sendeleistung bzw. Empfangsverstärkung bzw. Sendeburst) voneinander. Die Einzelmessungen des zweiten Messzyklus 13 werden dabei bei mittlerer Sendeleistung sowie bei mittlerer Empfangsverstärkung durchgeführt, so dass der zweite Messzyklus 13 für mittlere Messabstände und mittlere Störreflexionen optimiert ist. Ist der Messzyklus 13 abgeschlossen, wird für jede der n Einzelmessungen ein Messwert, insgesamt also wiederum n Messwerte, erhalten.

Der dritte Messzyklus 14 ist für große Messabstände und geringe Störreflexionen optimiert. Auch dieser dritte Messzyklus 14 besteht aus n Einzelmessungen (mit n = 2, 3, ...), mit denen ein dritter Erfassungsbereich vermessen wird. Bei jeder der n Einzelmessungen werden die Sendeleistung und/oder die Empfangsverstärkung und/oder der Sendeburst variiert, so dass sich auch bei diesem Messzyklus 14 die Einzelmessungen durch mindestens eine der drei Variablen (Sendeleistung bzw. Empfangsverstärkung bzw. Sendeburst) voneinander unterscheiden. Ist der dritte Messzyklus 14 abgeschlossen, so werden m Messwerte erhalten, die es auszuwerten gilt.

Alle durch die drei Messzyklen 12 bis 14 ermittelten Messwerte werden an das Steuermodul gesendet. In dem Steuermodul erfolgt für alle ermittelten Messwerte eine Plausibilitätsprüfung 18. Bei dieser Plausibilitätsprüfung 18 wird geprüft, ob die Einzelmessungen der verschiedenen Messzyklen zu verwertbaren Ergebnissen geführt haben. Es wird also überprüft, ob die durch die Messzyklen erhaltenen Messwerte gültig und damit verwertbar sind. Nicht verwertbare Messwerte werden mit dieser Plausibilitätsprüfung 18 herausgefiltert, so dass nur die verwertbaren Messwerte für die weitere Auswertung verwendet werden.
Die Plausibilitätsprüfung hat somit den Vorteil, dass von vornherein Fehlmessungen erkannt werden, so dass die aus diesen Fehlmessungen erhaltenen Messwerte nicht zur Bestimmung des Abstandes von Ultraschallwandler zum Inhalt des Sammelbehälters bzw. des Abstands von Ultraschallwandler zum Boden des Sammelbehälters herangezogen werden. Damit ist es möglich, die Abstände sehr genau zu bestimmen.

Anschließend erfolgt in dem Steuermodul eine adaptive Filterung 19 der Messwerte für den Abstand zwischen dem Ultraschallwandler und dem Inhalt des Sammelbehälters bzw. für den Abstand zwischen dem Ultraschallwandler und dem Boden des Sammelbehälters für alle drei Messzyklen 12 bis 14. Bei der adaptiven Filterung 19 werden dabei für jeden Messzyklus 12 bis 14 die Messwerte gemittelt und auf ihre Stabilität hin überprüft. Durch die Mittelung der Messwerte für jeden der drei Messzyklen 12 bis 14 werden somit drei Abstandswerte erhalten. Durch die Prüfung der Stabilität dieser drei durch Mittelung erhaltenen Abstandswerte für die drei Messzyklen 12 bis 14, wird geprüft, ob es sich bei diesen gemittelten Messwerten um gültige und damit verwertbare Abstandswerte 21 handelt, anhand derer der Füllstand des Sammelbehälters ermittelt werden kann. Wird ein ungültiger Abstandswert 22 erhalten, auf Grundlage dessen der Füllstand nicht ermittelt werden kann, so wird dieser ungültige Abstandswert als ein Diagnosewert 24 über die serielle Schnittstelle an die Sensoreinrichtung übertragen. Die Sensoreinrichtung ignoriert daraufhin diesen ungültigen Wert und übergibt das nachfolgende Echo als gültiges Echo an die externe Steuerung. Das ungültige Echo, insbesondere ein nicht verwertbarer Abstandswert, wird als Diagnoseinformation 24 über die serielle Schnittstelle an die Steuerung übertragen, auf das die Steuerung mit einer Anpassung der Sendeleistung bzw. der Empfangsverstärkung reagiert, d.h. die externe Steuerung führt demnach eine Diagnose aus, wobei diese Diagnose dazu dient, das Verfahren zur Füllstandermittlung zu optimieren.
Auf Grundlage der verwertbaren Abstandswerte 23 wird in der externen Steuerung der Füllstand errechnet. Dieser Füllstandwert kann dann gegebenenfalls über eine Anzeige einem Nutzer angezeigt werden. Durch die adaptive Filterung 19 der durch die Einzelmessungen erhaltenen Messwerte ist es somit möglich, den Füllstand des Sammelbehälters mit einem sehr geringen Rechenaufwand und zudem sehr genau zu bestimmen.

### Bezugszeichenliste

- 1: Sensoreinrichtung
- 2: Sammelbehälter
- 3: Kammer
- 4: Ultraschallwandler
- 5: Boden
- 6: Steuermodul
- 7: Sendeempfangsmodul
- 8: Bidirektionale serielle Schnittstelle
- 9: Datenspeichermodul
- 10: Steuerung
- 11: Messsequenz
- 12: Messzyklus
- 13: Messzyklus
- 14: Messzyklus
- 15: Einfüllklappe
- 16: Einfüllschacht
- 17: Initialisierung
- 18: Plausibilitätsprüfung für die Messwerte aus den drei Messzyklen
- 19: Adaptiver Filter für gültigen Messwert für die jeweiligen Messzyklen
- 20: Verzweigung in Abhängigkeit davon, ob der Messwert gültig ist
- 21: Messwert gültig
- 22: Messwert ungültig
- 23: Messwert ausgeben
- 24: Diagnose ausgeben

## Patentansprüche

1. Verfahren zum Erfassen eines Füllstands in einem Sammelbehälter (2) mittels einer Sensoreinrichtung (1), wobei der Sammelbehälter (2) m Erfassungsbereiche aufweist, die mittels Ultraschall vermessen werden, umfassend folgende Schritte:
1.0) es erfolgt eine Initialisierung für einen bestimmten Sammelbehältertyp, den es zu vermessen gilt, wobei bei der Initialisierung ein zuvor angefertigtes Profil für diesen Sammelbehältertyp aus einem Datenspeichermodul bereitgestellt wird, wobei das Profil abhängig vom jeweiligen Sammelbehältertyp sowie von dessen Behälterabmessungen ist und in dem Profil Grenzwerte für den Füllstand des Sammelbehältertyps definiert sind sowie Randbedingungen hinsichtlich der Luftfeuchtigkeit oder der Temperatur einbezogen werden und wobei als unterer Grenzwert der minimale Füllstand und als oberer Grenzwert der maximale Füllstand des Sammelbehälters definiert ist;
1.1) für jeden der m Erfassungsbereiche wird ein Messzyklus (12 bis 14) durchgeführt, wobei m = 2, 3, ... ist;
1.2) in jedem Messzyklus (12 bis 14) werden n Einzelmessungen durchgeführt, mit n = 2, 3, ..., wobei bei jeder der n Einzelmessungen eine Sendeleistung und/oder eine Empfangsverstärkung und/oder ein Sendeburst angepasst wird, wodurch sich die Einzelmessungen in der Sendeleistung und/oder in der Empfangsverstärkung und/oder in dem Sendeburst voneinander unterscheiden, wobei bei jeder Einzelmessung ein Ultraschallwandler (4) der Sensoreinrichtung (1) ein Signal aussendet, das von einem Inhalt des Sammelbehälters (2) und/oder von einem Boden des Sammelbehälters (2) als Echosignal reflektiert wird und dass das Echosignal vom Ultraschallwandler (4) in ein elektrisches Signal umgewandelt wird, das von dem Ultraschallwandler (4) an ein Steuermodul (6) gesendet wird;
1.3) für jeden Messzyklus (12 bis 14) wird durch das Steuermodul (6) eine Plausibilitätsprüfung durchgeführt, wobei mittels der Plausibilitätsprüfung die aus den n Einzelmessungen eines jeden Messzyklus (12 bis 14) erhaltenen verwertbaren Messwerte weiterverarbeitet und ungültige Messwerte verworfen werden.

2. Verfahren nach Patentanspruch 1, **dadurch gekennzeichnet, dass** in dem Steuermodul (6) eine adaptive Filterung durchgeführt wird, bei der die verwertbaren Messwerte eines jeden Messzyklus (12 bis 14) gemittelt werden, so dass für jeden Messzyklus (12 bis 14) ein gemittelter Abstandswert erhalten wird.

3. Verfahren nach Patentanspruch 2, **dadurch gekennzeichnet, dass** die durch die adaptive Filterung erhaltenen Abstandswerte auf ihre Stabilität hin überprüft werden, wobei durch die Stabilitätsprüfung verwertbare Abstandswerte sowie unverwertbare Abstandswerte erhalten werden, wobei verwertbare Abstandswerte weiterverarbeitet und unverwertbare Abstandswerte verworfen werden.

4. Verfahren nach Patentanspruch 3, **dadurch gekennzeichnet, dass** die verwertbaren Abstandswerte über eine bidirektionale serielle Schnittstelle (8) an eine übergeordnete Steuerung (10) gesendet werden, wobei die übergeordnete Steuerung (10) aus den verwertbaren Abstandswerten den Füllstand des Sammelbehälters (2) errechnet.

5. Verfahren nach Patentanspruch 4, **dadurch gekennzeichnet, dass** der ermittelte Füllstand durch eine an der externen Steuerung (10) angeschlossenen Anzeige einem Nutzer angezeigt wird.

6. Verfahren nach Patentanspruch 1, **dadurch gekennzeichnet, dass** die externe Steuerung (10) eine Diagnose durchführt, wenn in der Sensoreinrichtung (1) ein nicht verwertbarer Abstandswert erhalten wird, und dass die externe Steuerung (10) das Ergebnis dieser Diagnose als Diagnosewert an die bidirektionalen serielle Schnittstelle (8) überträgt, wobei diese externe Steuerung (10) die Sendeleistung und/oder die Empfangsverstärkung anpasst.

7. Sensoreinrichtung, **dadurch gekennzeichnet, dass** sie zur Durchführung des Verfahrens nach den Patentansprüchen 1 bis 6 ausgeführt ist.

## Claims

1. Method for registering a fill level in a collecting tank (2) by means of a sensor system (1), wherein the collecting tank (2) comprises m registration regions that are to be measured by means of ultrasound, comprising the following steps:
1.0 an initialization is performed for a certain type of collecting tank that is to be measured, wherein, in the initialization a previously established profile for this type of collecting tank is provided out of a data storage module, wherein the profile depends on the particular type of collecting tank as well as on its tank dimensions and in the profile limit values for the fill level of the type of collecting tank are defined as well as boundary conditions with respect to atmospheric humidity or temperature are included and wherein as the lower limit value the minimum fill level and as the upper limit value the maximum fill level of the collecting tank are defined,
1.1 for each of the m registration regions a measuring cycle (12 to 14) is performed, wherein m = 2, 3, ....,
1.2 in each measuring cycle (12 to 14) n individual measurements are performed with n = 2, 3, ..., wherein during each of the n individual measurements a transmitting power and/or a receiving amplification and/or a transmit burst is adapted whereby the individual measurements differ from one another by their transmitting power and/or receiving amplification and/or transmit burst, wherein with each individual measurement an ultrasonic transducer (4) of the sensor system (1) outputs a signal that is reflected as an echo signal by a content of the collecting tank (2) and/or by a bottom of the collecting tank (2) and that the echo signal is converted by the ultrasonic transducer (4) into an electric signal that is transmitted from the ultrasonic transducer (4) to a control module (6),
1.3 for each measuring cycle (12 to 14) a plausibility check is performed by the control module (6), wherein by means of the plausibility check the usable measurement values out of the n individual measurements of each measuring cycle(12 to 14) received are further processed and invalid measurement values are rejected.

2. Method as in patent claim 1, **characterized in that** in the control module (6) an adaptive filtering process is performed in which the average of the usable measurement values of each measuring cycle (12 to 14) is formed such that for each measuring cycle (12 to 14) an average distance value is obtained.

3. Method as in patent claim 2, **characterized in that** the distance values obtained through the adaptive filtering process are checked for their stability, wherein through the stability check usable distance values as well as unusable distance values are obtained, with the usable distance values being further processed and the unusable distance values being rejected.

4. Method as in patent claim 3, **characterized in that** the usable distance values are transmitted across a bidirectional serial interface (8) to a higher level control (10), wherein the higher level control (10) computes the fill level of the collecting tank (2) from the usable distance values.

5. Method as in patent claim 4, **characterized in that** the determined fill level is displayed to the user through a display connected to the external control (10).

6. Method as in patent claim 1, **characterized in that** the external control (10) performs diagnostics if an unusable distance value is received in the sensor system (1) and that the external control (10) transmits the result of these diagnostics as a diagnostic value to the bidirectional serial interface (8), wherein this external control (10) adapts the transmitting power and/or the receiving amplification.

7. Sensor system, **characterized in that** it is implemented for carrying out the method as in patent claims 1 to 6.

## Revendications

1. Procédé pour détecter un niveau de remplissage dans un réservoir collecteur (2) au moyen d'un dispositif de détection (1), dans lequel le réservoir collecteur (2) présente m zones de détection que l'on jauge au moyen d'ultrasons, comprenant les étapes suivantes:
1.0 une initialisation a lieu pour un type défini de réservoir collecteur qu'il s'agit de jauger, dans lequel, lors de l'initialisation, un profil préalablement confectionné pour ce type de réservoir collecteur est mis à disposition à partir d'un module de stockage de données, dans lequel le profil est dépendant du type respectif de réservoir collecteur ainsi que des dimensions de réservoir de celui-ci et dans le profil, des valeurs limites pour le niveau de remplissage du type de réservoir collecteur sont définies ainsi que des conditions aux limites concernant l'humidité de l'air ou la température sont prises en comptes et dans lequel on définit, en tant que valeur limite inférieure, le niveau de remplissage minimal et en tant que valeur limite supérieure, le niveau de remplissage maximal du réservoir collecteur;
1.1 pour chacune des m zones de détection, un cycle de mesure (12 à 14) est réalisé, dans lequel m est = 2, 3,...;
1.2 dans chaque cycle de mesure (12 à 14) n mesures individuelles sont réalisées avec n = 2, 3,..., dans lequel, à chacune des n mesures individuelles, une puissance d'émission et/ou une amplification de réception et/ou une salve d'émission est adaptée, moyennant quoi les mesures individuelles diffèrent entre elles concernant la puissance d'émission et/ou l'amplification de réception et/ou la salve d'émission, dans lequel, à chaque mesure individuelle, un transducteur d'ultrasons (4) du dispositif de détection (1) émet un signal qui est réfléchi par un contenu du réservoir collecteur (2) et/ou par un fond du réservoir collecteur (2) en tant que signal d'écho, et que le signal d'écho est transformé par le transducteur d'ultrasons (4) en un signal électrique qui est envoyé par le transducteur d'ultrasons (4) à un module de commande (6);
1.3 pour chaque cycle de mesure (12 à 14), un contrôle de plausibilité est réalisé par le module de commande (6), dans lequel, au moyen du contrôle de plausibilité, les valeurs de mesure utilisables obtenues à partir des n mesures individuelles de chaque cycle de mesure (12 à 14) sont soumises à un traitement ultérieur et des valeurs de mesure non valides sont rejetées.

2. Procédé selon la revendication 1, **caractérisé en ce que,** dans le module de commande (6), un filtrage adaptif est réalisé où les valeurs de mesure utilisables de chaque cycle de mesure (12 à 14) sont soumises à un calcul de la moyenne de sorte que pour chaque cycle de mesure (12 à 14), une valeur de distance moyenne est obtenue.

3. Procédé selon la revendication 2, **caractérisé en ce que** les valeurs de distance obtenues par le filtrage adaptif sont contrôlées concernant leurs stabilité, dans lequel, grâce au contrôle de stabilité, des valeurs de distance utilisables ainsi que des valeurs de distance non utilisables sont obtenues, dans lequel des valeurs de distance utilisables sont soumises à un traitement ultérieur et des valeurs de distance non utilisables sont rejetées.

4. Procédé selon la revendication 3, **caractérisé en ce que** les valeurs de distance utilisables sont envoyées via une interface série bidirectionnelle (8) à une commande prioritaire (10), dans lequel la commande prioritaire (10) calcule, à partir des valeurs de distance utilisables, le niveau de remplissage du réservoir collecteur (2).

5. Procédé selon la revendication 4, **caractérisé en ce que** le niveau de remplissage déterminé est affiché pour un utilisateur par un affichage connecté à la commande externe (10).

6. Procédé selon la revendication 1, **caractérisé en ce que** la commande externe (10) réalise un diagnostic lorsqu'une valeur de distance non utilisable est obtenue dans le dispositif de détection (1) et que la commande externe (10) transmet le résultat de ce diagnostic en tant que valeur de diagnostic à l'interface série bidirectionnelle (8), dans lequel cette commande externe (10) adapte la puissance d'émission et/ou l'amplification de réception.

7. Dispositif de détection, **caractérisé en ce qu'**il est réalisé pour la mise en oeuvre du procédé selon les revendications 1 à 6.
